# EUROPEAN PATENT SPECIFICATION

(11) **EP 0 659 787 B1**
(45) Date of publication and mention of the grant of the patent: **20.09.2000**
(21) Application number: 94203713.6
(22) Date of filing: 21.12.1994
(51) Int. Cl.: C08F 297/04, C08G 81/02, C09J 153/02, C08L 53/02

(54) **Block copolymers and high shear strength pressure sensitive adhesive compositions comprising them**
Blockcopolymere und diese enthaltende Selbstkleberzusammensetzung mit hoher Scherfestigkeit
Copolymères blocs et compositions adhésives sensibles à la pression, à forte résistance au cisaillement comprenant les dits copolymères

(30) Priority: 23.12.1993 EP 93203666
(43) Date of publication of application: 28.06.1995
(73) Proprietor: SHELL INTERNATIONALE RESEARCH MAATSCHAPPIJ B.V., 2596 HR Den Haag (NL)
(72) Inventor: De Keyzer, Noel Raymond Maurice, B-1348 Ottignies, Louvain-La-Neuve (BE); Vermunicht, Geert Emiel Anna, B-1348 Ottignies, Louvain-La-Neuve (BE); Vervoort, Freddy Maria Armand, B-1348 Ottignies, Louvain-La-Neuve (BE)

(56) References cited:
- EP-A- 0 316 857
- EP-A- 0 451 919
- DE-A- 1 594 267
- US-A- 3 231 635
- US-A- 3 723 170

## Description

The invention is relating to block copolymers and high shear strength pressure sensitive adhesive compositions, comprising them. More in particular, the invention is relating to block copolymers to be used in pressure sensitive adhesive tape, which is especially suited for sealing boxes and which must exhibit a relatively high value of shear strength (further to be mentioned packaging tape).

It will be appreciated that, moreover, such a tape simultaneously has to be relatively soft and be economically feasible, i.e. it must be produced at a cost price as low as possible.

Varying efforts were made during the last decades to provide such basic block copolymers.

US patent No. 3,239,478 disclosed an adhesive comprising a block copolymer having a general configuration A-B-A, wherein each A is thermoplastic polymer block and which is relatively incompatible with the elastomeric B segment; the average molecular weight of each A being between about 5,000 and 125,000; B is a polymer block of a conjugated diene, the average molecular weight of the blocks being between about 15,000 and about 250,000; the total of blocks A being less than about 80% by weight of the block copolymer; in addition to the block copolymer a tackifying resin and a particular extender oil, said oil being substantially incompatible with homopolymers of the aforesaid thermoplastic terminal blocks and being substantially compatible with homopolymers of the aforesaid conjugated diene. Compositions of the block copolymer described above with 5 to 200 phr (preferably 25 to 125 phr) (parts per hundred of block copolymer) of extending oil and 25 to 300 phr (preferably 50 to 200 phr) of a tackifying resin were disclosed. By adjustment of the proportions of the three basic ingredients and choice of molecular weight of copolymer, melting point and type of tackifying resin, compatibility of oil and resin with the copolymer, a hot-melt adhesive can be provided.

US patent no. 3,723,170 and in particular column 4, lines 47-58 and example V, disclosed poly(styrene)-poly(isoprene)-poly(styrene) block copolymers, having poly(styrene) blocks of a number average molecular weight of 7000, 3.200 and 21.800 respectively in combination with a poly(styrene) content of 20% and total number average molecular weight of 70.000 (Ex III), 132.000(Ex V), and 218.000 (Ex VI) respectively.

US patent No. 3,753,936 disclosed (A-B)ₓY type polymers wherein A represents non-elastomeric polymer blocks, or segments, and B represents elastomeric polymer segments, Y is an atom or group of atoms derived from a polyfunctional treating agent used in the formation of the radial polymers, and x is an integer of at least 3 and can be equal to the number of functional groups of said polyfunctional treating agent. The radial block polymer thus can be characterized as having at least three polymer branches with each branch of the radial block polymer comprising terminal non-elastomeric segments. the branches of the radial block polymer contain a terminal non-elastomeric segment attached to an elastomeric polymer segment.

US patent No. 3,935,338 disclosed block copolymers having at least two monoalkenyl arene polymer blocks and at least one elastomeric conjugated diene polymer block. The macromolecular configuration may be either linear or radial dependent upon the method by which the block copolymer was formed. Typical block copolymers of the most simple configuration would have the structure polystyrene-polyisoprene-polystyrene, and polystyrene-polybutadiene-polystyrene. The adhesive composition of US patent No. 3,935,338 calls for 25 to 100 parts by weight extending oil per hundred parts by weight rubber. The addition of even a moderate amount of oil drastically reduced the peel adhesion and the shear adhesion failure temperature, thus indicating that such compositions would be unsatisfactory in many adhesive applications even though the addition of oil did, in fact, substantially reduce the viscosities of the hot-melts derived therefrom.

US patent No. 3,954,692 disclosed a mixture of (a) an unvoulcanized elastomeric block copolymer having the general configuration A-B-A wherein each A is an independently selected non-elastomeric monovinyl aromatic hydrocarbon polymer block having an average molecular weight of 2,000 to 100,000, the total block A content being from about 10 to about 50% by weight of the copolymer, and B is an elastomeric conjugated diene polymer block having an average molecular weight from about 25,000 to about 1.000,000, and (b) a compatible, thermoplastic tackifying resin containing carbon-to-carbon unsaturation therein and derived from hydrocarbons having from 5 to 8 carbon atoms and at least one carbon-to-carbon double bond therein selected from aliphatic hydrocarbons and alicyclic hydrocarbons.

US patent No. 5,183,705 disclosed tacky pressure sensitive adhesive compositions comprising (1) a radial teleblock copolymer having at least three monoalkenylarene polymer blocks and a branched elastomeric conjugated diene polymer block; (2) a tackifying resin; and (3) from about 5 to about 20 parts by weight extending oil per hundred parts by weight of radial polymer.

The radial teleblock copolymer is preferably of the formula (AB)ₙ-Z, wherein n represents an integer equal to or greater than 3 and Z represents a multifunctional linking agent.

Said pressure sensitive adhesive compositions were indicated to provide a superior adhesive for hot-melt coating of pressure sensitive tapes suitable for sealing containers.

The monoalkenylarene polymer blocks of said block copolymers comprise from about 17 to about 23% by weight of said block copolymer and the molecular weight of said block copolymer ranges from about 180,000 to 250,000; n should preferably represent the integer 3 or 4.

From US patent No. 5,194,500 adhesive compositions were known, which contain a tackifying resin and a branched three-armed S-I-S block copolymer composition, wherein S represents a poly(alkenyl-aromatic hydrocarbon) block and wherein I is a poly(isoprene) block. Said branched block copolymer showed a molecular weight (as polystyrene equivalent) from 180,000 to 250,000, a polystyrene content from 17 to 23 wt% of the block copolymer composition and a percentage of S-I arms, which are load bearing, by weight of the block copolymer composition is greater than 85%. These adhesive compositions were indicated to have an acceptable holding in a shear test, which feature is important for packaging applications.

European patent application no. 0451,919 disclosed low viscosity at application temperature hot-melt adhesive compositions, containing linear poly(styrene)-poly(isoprene)-poly(styrene) block copolymers comprising linear polymeric blocks, wherein the polystyrene block molecular weight ranges from 14,000 to 16,000, the polystyrene content ranging from 25% to 35% by weight of the block copolymer and the molecular weight of the block copolymer ranges from 100,000 to 145,000.

It will be appreciated that there has still remained a generally recognized need for further improvement of pressure sensitive adhesive compositions to be used primarily for packaging tapes.

Therefore, it is an object of the present invention to provide such adhesive compositions aimed at.

More in particular, it is a sub-object of the present invention to provide specific tailor-made block copolymers, which, when incorporated in said adhesive compositions, may improve these adhesive compositions in respect of their suitability for packaging tapes.

Said suitability for packaging tapes can be tested according to the so-called flap test method, which was developed during the last ten years and which was disclosed in C.P.L.C. Donker, European Adhesives and Sealants, December 1991, pages 21-24. As such this flap test is a combination of peel adhesion and shear adhesion testing.

As a result of extensive research and experimentation such block copolymers aimed at were surprisingly found.

Accordingly, one aspect of the present invention is formed by linear block copolymers, comprising two terminal blocks of predominantly a monovinylaromatic compound, and one block of predominantly a conjugated diene and characterized by a monovinylaromatic content in the range of from 15 to 25 wt%, a total apparent molecular weight in the range of from 140,000 to 170,000 and a true molecular weight of poly(monovinylaromatic) blocks in the range of from 10,000 to 13,000, optionally mixed with minor amounts of diblock copolymer (less than 20 wt%, relative to the weight of the total block copolymer weight), and comprising blocks similar to those of the triblock copolymer component.

With the term "predominantly a monovinylaromatic compound" and predominantly a conjugated diene" as used throughout the present specification, is meant respectively that substantially pure homopolymer blocks or copolymer blocks derived from one major monomer, i.e. at least 80 wt% and preferably more than 95 wt%, and a minor amount of structurally related comonomers, e.g. methylstyrene in case of styrene as major monomer or butadiene in case of isoprene as major monomer, or a minor amount of the other comonomer(s) occurring in the final block copolymers (e.g. isoprene in styrene as major monomer or styrene in isoprene as major monomer).

Preferred block copolymers of the present invention contain as major monovinylaromatic compound styrene and as major conjugated diene monomer isoprene or butadiene.

It will be appreciated that during the polymerization of butadiene or isoprene these monomers can be (addition) polymerized in 1,4 form and/or 1,2 or 3,4 form, depending on the presence of a polar modifier.

In case of predominantly poly(butadiene) blocks, the preferred molar content of 1,2 polymerized butadiene units is in the range of from 10-75% and more preferably in the range of from 25-50%.

Most preferably, the block copolymers are composed by substantially pure poly(styrene) homopolymer blocks and pure poly(isoprene) homopolymer blocks.

The most preferred triblock copolymers have a monovinylaromatic and in particular styrene content of from 19 to 25 wt%, a total apparent molecular weight in the range of from 140,000 to 170,000, and a true molecular weight of the poly(monovinylaromatic) blocks in the range of from 11,000 to 13,000.

With the term "diblock copolymers, ...... and comprising blocks, similar to those of the triblock copolymer component", as used throughout the present specification, is meant diblock copolymers, the poly(monovinylaromatic) block of which is substantially identical to the poly(monovinylaromatic) blocks of the triblock copolymer.

The term "substantially identical" as used in this connection, means that the molar weight ratio between the poly(monovinylaromatic) blocks of the diblock and triblock copolymer is within the range from 0.95 to 1.05 and preferably from 0.99 to 1.01.

With the term "apparent molecular weight" as used throughout the present specification is meant the molecular weight of a polymer, as measured with Gel Permeation Chromatography (GPC) using several poly(styrene) calibration standards as described in ASTM D-3536.

With the term "true molecular weight", as used throughout the specification, is meant the molecular weight of an isolated poly(monovinylaromatic) block, e.g. as sampled just after first polymerization step, measured by means of GPC, using several poly(styrene) calibration standards as described in ASTM D-3536.

The total average apparent molecular weights of any optionally occurring diblocks are in the range of from 50,000 to 150,000 and preferably from 70,000 to 90,000.

More preferably the molecular weight of any diblock copolymer is about half the molecular weight of the triblock copolymer. It will be appreciated that the triblock copolymer to be used according to the present invention, can be used in substantially pure form or mixed with similar diblock copolymers.

These triblock copolymers are obtainable by:
(a) preparation of a living diblock copolymer by subsequent complete anionic polymerization of monovinylaromatic monomer and conjugated diene by means of an organolithium initiator in an organic solvent, and coupling these intermediate living polymers by means of a bi-functional coupling agent, such as MDCS (methyldichlorosilane), carbon dioxide, DBE (di-bromoethane), MBZ (methylbenzoate), DMA (dimethyladipate), DEAP (diethyladipate), EPON 825 (EPON is a trademark), and terminating the remaining living polymer with a proton donating agent such as water, acid or alcohol.
   It will be appreciated that the obtained triblock copolymer is mixed in that case with terminated diblock copolymer, having a poly(monovinylaromatic) block of a molecular weight, which is about the same as that of the triblock copolymer, and the molecular weight of the poly(conjugated diene) block of which is about half that of the midblock of the coupled triblock copolymer.
   The amount of present diblock copolymer in the final block copolymer composition will depend on the coupling efficiency of the specifically used coupling agent (normally being in the range of from 45-95%) and will be more difficultly controllable.
(b) preparation of a living diblock copolymer by subsequent complete anionic polymerization of monovinylaromatic and conjugated diene, by means of an organolithium initiator in an organic solvent optionally followed by second initiation with an organolithium initiator and subsequent polymerization of an additional amount of conjugated diene until completeness and addition and polymerization until completeness of an additional amount of monovinylaromatic monomer.
   It will be appreciated that by means of fine tuning of the respective additional amounts of conjugated diene and monovinylaromatic monomer, a specifically desired fully sequential triblock can be obtained, optionally in combination with an adjustable, predetermined amount of diblock copolymer, having a poly(vinylaromatic) block, the molecular weight of which is about the same as that one of the last poly(vinylaromatic) block of the triblock copolymer.

In the more preferred triblock copolymers the poly(monovinylaromatic)blocks are substantially identical.

It has been found that the preferred block copolymers to be used in high shear strength adhesive compositions according to the present invention must have a diblock copolymer content of less than 20 wt%, relative to the weight of the total block copolymer compositions and the most preferred block copolymers have a diblock copolymer content in the range of from 0 to 15 wt%.

Said preferred group block copolymers have been found to provide a relatively low hot-melt viscosity when incorporated in adhesive compositions.

It will be appreciated that another aspect of the present invention is formed by high shear strength pressure sensitive adhesive compositions, comprising one or more hereinbefore specified block copolymers, in addition to one or more members selected from tackifying resins, plasticizers, such as rubber extending plasticizers or compounding oils or liquid resins, stabilizers which inhibit or retard heat degradation, oxidation, skin formation and colour formation. Stabilizers are typically added to the commercially available compositions in order to protect the polymers against heat degradation and oxidation during the preparation, use and storage of the adhesive compositions.

The adhesive compositions can be composed and applied as hot-melt adhesives and as solvent-based adhesives, the former of which are strongly preferred.

The hot-melt adhesive composition according to the present invention normally comprises of from 15 wt% to 50 wt% of the hereinbefore specified block copolymer, preferably from 30 wt% to 50 wt%, based on the weight of the hot-melt adhesive composition; from 25 wt% to 50 wt%, preferably from 30 wt% to 50 wt% of a compatible primary tackifying resin; based on the weight of the hot-melt adhesive composition, from 0 wt% to 20 wt%, preferably from 5 wt% to 15 wt%, of a plasticizing oil or secondary tackifying resin or both, based on the weight of the hot-melt adhesive composition; and from 0.1 wt% to 2 wt%, preferably from 0.5 wt% to 1.5 wt% of a stabilizer and/or antioxidant, based on the weight of the hot-melt adhesive composition.

The primary tackifying resins useful in the practice of this invention include hydrocarbon resins, synthetic polyterpenes, rosin esters and natural terpenes which are semi-solid or solid at ambient temperatures, and soften or become liquid at temperatures ranging generally from 70 °C to 135 °C, preferably from 85 °C to 120 °C. Exemplary of the primary tackifying resins are compatible resins such as (1) natural and modified rosins such as, for example, gum rosin, wood rosin, tall oil rosin, distilled rosin, hydrogenated rosin, dimerized rosin, and polymerized rosin; (2) glycerol and pentaerythritol esters of natural and modified rosins, such as, for example, the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natured terpenes, e.g. styrene/terpene and alphamethyl styrene/terpene; (4) polyterpene resins having a softening point, as determined by ASTM method E28-58T, of from 80 °C to 150 °C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof such as, for example, the resin product resulting from the condensation, in an acidic medium, of a bicyclic terpene and a phenol; (6) aliphatic petroleum hydrocarbon resins having a Ball and Ring softening point of from 70 °C to 135 °C; the latter resins resulting from the polymerization of monomers consisting primarily of olefins and diolefins; also included are the hydrogenated aliphatic petroleum hydrocarbon resins; (7) aromatic petroleum hydrocarbon resins, and mixed aromatic and aliphatic petroleum hydrocarbon resins, and the hydrogenated derivatives thereof; (8) aromatic modified alicyclic petroleum hydrocarbon resins and the hydrogenated derivatives thereof; and (9) alicyclic petroleum hydrocarbon resins and the hydrogenated derivatives thereof. The preferred primary tackifying resins for use in the practice of this invention are represented by those of the sub-paragraphs (1), (3) and (7), supra or mixtures thereof. Suitable secondary tackifying resins are those named species wherein the resin is a liquid at ambient temperature.

Most preferred primary tackifying resins have been found to belong to the type of resins as specified in subparagraph 7, wherein the aliphatic hydrocarbon resins represent the major part, i.e. more than 50 wt% of the total resin.

Examples of such resins are marketed by HERCULES companies under the tradename HERCULES MBG and HERCOTAC and in particular HERCULES MBG 208 and those resins marketed by EXXON under the tradename ESCOREZ 2000 series.

Various plasticizing oils are useful in the practice of this invention. The plasticizing oil can be used in place of or in combination with the secondary tackifier to reduce viscosity and improve tack properties. Plasticizing oils which have been found useful include olefin oligomers and low molecular weight polymers as well as vegetable and animal oil and their derivatives. The petroleum derived oils which may be employed are relatively high boiling materials containing only a minor proportion of aromatic hydrocarbons (preferably less than 30 per cent and, more particularly, less than 15 per cent by weight of the oil). Alternatively, the oil may be totally non-aromatic. The oligomers may be polypropylenes, polybutenes, hydrogenated polyisoprene, hydrogenated polybutadiene, polypiperylene and copolymers of piperylene and isoprene having average molecular weights between 350 and 10,000. Vegetable and animal oils include glyceryl esters of the usual fatty acids and polymerization products thereof.

The stabilizer and/or antioxidant, used in accordance with the practice of the present invention includes high molecular weight hindered phenol derivatives, high molecular weight hindered amine or triazine derivatives or phosphorous and/or sulphur-containing hindered compounds, or mixtures thereof.

Examples of suitable stabilizers and/or antioxidants for this purpose can be selected from:

1,3,5-trimethyl 2,4,6-tris(3,5-di-tert-butyl-4-hydroxybenzyl) benzene; pentaerythrityl tetrakis-3 (3,5-di-tert-butyl-4-hydroxy-hydrocinnamate); n-octadecyl-3,3,5-di-tert-butyl-4-hydroxyphenyl)propionate; 4,4'-methylenebis (2,6-tert-butylphenol); 4,4'-thiobis (6-tert-butyl-o-cresol); 2,6-di-tertbutylphenol; 6-(4-hydroxyphenoxy)-2,4-bis(n-octyl-thio)1,3,5 triazine; di-n-octadecyl 3,5-di-tert-butyl-4-hydroxy-benzylphosphonate; 2-(n-octylthio) ethyl 3,5-di-tert-butyl-4-hydroxy-benzoate; sorbitol [hex 3-(3,5-di-tert-butyl-4-hydroxyphenyl)propionate]; n-octadecyl-3 (3',5'-di-tert-butyl-4'-hydroxyphenyl)propionate; tetrakis-[methylene-3(3',5'-di-tert-butyl-4'-hydroxyphenyl)propionate]methane; 1,3,5-trimethyl-2,4,6 tris(3,5-di-tert-butyl-4-hydroxybenzyl)benzene; 2,4-bis(n-octylthio)-6-(4-hydroxy-3,5-di-tert-butylanilino)1,3,5-triazine; 2,6-di-tert-butyl-4-methylphenol; 2,2'-methylene bis(4-methyl-6-tert-butylphenol)monoacrylate; 2,2'-methylene bis(4,6-di-tert-butylphenol)monoacrylate; 2,2'-ethylidene bis(4,6-di-tert-butylphenol)monoacrylate; 2,2'-methylene bis(4-methyl-6-tert-butylphenol)diacrylate; 2,2'-methylene bis(4,6-tert-butylphenol)diacrylate; 2,2'-ethylidene bis(4,6-di-tert-butylphenol)diacrylate; 4,4-butylidene-bis-(3-methyl-6-tert-butylphenol); 3,9-bis [2-{3-(3-tert-butyl-4-hydroxy-5-methylphenyl)propionyloxy}-1,1-dimethylethyl]-2,4,8-10 tetraoxaspiro [5,5] undane; bis(2,4-di-tert-butylphenyl) pentaerythritol) diphosphite; octadecylester of 3,5 bis(1,1-dimethylethyl)-4-hydroxy benzene propanoic acid; distearyl pentaerythritol diphosphite; tris(nonylphenyl)phosphite, cyclic neopentane tetrayl bis(octadecylphosphite); tris(2,4-di-tert-butylphenyl)phosphite; 4,4-butylidene-bis (3-methyl-6-tert-butylphenyl-di-tridecyl)phosphite; tetrakis(2,4-di-tert-butylphenyl)-4,4'-biphenylenediphosphinite, cyclic neopentane tetrayl bis(2,4-di-tert-butylphenyl)phosphite; diphenylamine; N-phenyl-α-naphthylamine, N-phenyl-β-naphthylamine, butylated diphenylamine; styrenated diphenylamine; octylated diphenylamine; nonylated diphenylamine; N-cyclohexylaniline; N-methylaniline; N-isopropylaniline; N-1,3-dimethylbutylaniline; N-(2-ethylhexyl)aniline; N,N'-diaryl-p-phenylenediamine type stabilizers such as N,N'-diphenyl-p-phenylenediamine, N,N'-diorthotolyl-p-phenylenediamine, N,N'-bis(2,4-xylyl)-p-phenylenediamine, N,N'-bistolyl-p-phenylenediamine, N,N'-ditolyl-p-phenylenediamine, N-tolyl-N'-xylyl-p-phenylenediamine, N,N'-dixylyl-p-phenylenediamine, N,N'-bis-β-naphthyl-p-phenylenediamine, and the like; N-aryl-p-phenylenediamine type stabilizers such as N-phenyl-p-phenylenediamine, N-tolyl-p-phenylenediamine, N-xylyl-p-phenylenediamine and the like; N-aryl-N'-alkyl-p-phenylenediamine type stabilizers such as N-phenyl-N'-isopropyl-p-phenylenediamine, N-phenyl-N'-isobutyl-p-phenylenediamine, N-phenyl-N'-(1,3-dimethylbutyl)-p-phenylenediamine, N-phenyl-N'-cyclohexyl-p-phenylenediamine, N-phenyl-N'-octyl-p-phenylenediamine, and the like; N,N'-dialkyl-p-phenylenediamine type stabilizers such as N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, and the like; quinoline derivative type stabilizers such as 2,2,4-trimethyl-1,2-dihydroquinoline, 2,2,4-trimethyl-1,2-dihydroquinoline polymers, 6-ethoxy-2,2,4-trimethyl-1,2-dihydroquinoline, and the like; and condensation product type stabilizers such as dehydrating-condensation products of aldol-α-naphthylamine or diphenylamine; dilauryl 3,3'-thiopropionic acid esters; dimyristyl-3,3'-thiodipropionic acid esters; distearyl-3,3'-thiodipropionic acid esters; laurylstearyl-3,3'-thiodipropionic acid esters; ditridecyl-3,3'-thiodipropionic acid esters; pentaerythritoltetrakis-(laurylthiopropionate); 3,9-bis(2-dodecylthioethyl)-2,4,8,10-tetraoxaspiro[5,5]undecane; distearyl-3,3'-thiodinronionate; 3,9-bis(2-octadecylthiopropyl)-2,4,8,10-tetraoxaspiro[5,5]undecane.

It will be appreciated that these stabilizers may be used alone or in proper combination of two or more of them.

Preferred representatives of stabilizers and/or antioxidants are pentaerythrityl-tetrakis(3,5-di-tert-butyl-4-hydroxy-hydrocinnamate) (IRGANOX 1010); octadecyl ester of 3,5-bis (1,1-dimethylethyl)-4-hydroxy benzene propanoic acid (IRGANOX 1076); 2,4-bis (n-octylthio)-6-(4-hydroxy-3,5-di-tert-butylanilino)-1,3,5-triazine (IRGANOX 565); 2-tert-butyl-6-(3-tert-butyl-2'-hydroxy-5-methylbenzyl)-4-methylphenyl acrylate (SUMILIZER GM); tris (nonylphenyl)phosphite; tris (mixed mono- and di-phenyl)phosphite; bis (2,4-di-tert-butylphenyl)pentaerythritol diphosphite (ULTRANOX 626); distearyl pentaerythritol diphosphite (WESTON 618); styrenated diphenylamine (NAUGARD 445); N-1,3-dimethylbutyl-N'-phenyl-paraphenylenediamine (SUMILIZER 116 PPD); tris (2,4-di-tert-butylphenyl)phosphite (IRGAFOS 168); 4,4-butylidene-bis-(3-methyl-6-tert-butylphenol) (SUMILIZER BBMS); or combinations thereof.

Most preferably are used combinations of tris(nonylphenyl)phosphite (TNPP) and IRGANOX 1076, IRGANOX 565, IRGANOX 1010 or SUMILIZER GM. (IRGANOX, SUMILIZER, ULTRANOX, NAUGARD, WESTON and IRGAFOS are trade marks.)

The hot-melt adhesive composition is prepared by blending the block copolymer with the stabilizer, and/or antioxidant, primary tackifying resin, the optional secondary tackifying resin or plasticizing oil, in orders of sequence which are generally known in the art.

In commercial practice it is preferred that the primary tackifying resin, the block copolymer and the stabilizer and/or antioxidant are premixed, followed by the addition of the optional secondary tackifying resin and/or plasticizing oil, under mixing conditions to provide a sufficiently elevated temperature to form a fluid melt.

For example, the copolymer can be blended with stabilizer/antioxidant and a solid compatible primary tackifying resin at temperatures ranging from 130 °C to 200 °C, preferably from 150 °C to 180 °C, to form a fluid melt. The optionally secondary liquid tackifying resin, or plasticizing oil can then be added to the melt.

The adhesive compositions of the present invention have been found to show surprisingly attractive combinations of hot-melt viscosity and of adhesion properties, such as shear adhesion to steel, peel adhesion to steel, shear adhesion to carton, flaptest to carton, rolling ball tack, loop tack and SAFT, which make them excellent compositions for packaging tape manufacture.

It will be appreciated that such adhesive properties could in no way be expected by a person skilled in the art, whose attention to the contrary was led by the hereinbefore discussed recent publications to the use of multi-armed coupled block copolymers in adhesive compositions for packaging tapes.

It will be appreciated that other aspects of the present invention will be formed by the use of the adhesive compositions, according to the present invention and as specified hereinbefore, for the manufacture of packaging tapes by application of an adhesive solution or an adhesive hot-melt on a suitable carrier, such as polypropylene or polyester film, by means of methods known per se in the art,and by these packaging tapes themselves.

The invention will be illustrated by the following examples, however, without any restriction of the scope of the present invention to these specific embodiments.

The copolymer for the adhesive composition, in the form of crumbs or pellets, was fed by means of a weigh feeder belt into the feed section of a co-rotating twin screw extruder having melting, mixing, and pumping elements. The tackifying resin was converted to molten form in a melt pot and pumped by means of a metering pump into one or more of the auxiliary ports in the extruder barrel. The extending oil was pumped by means of a metering pump into another of the auxiliary ports in the extruder barrel. The weigh feeder belt for the elastomer and the metering pumps for the tackifying resin and the extending oil were calibrated to provide the formulations set forth in Table I. Antioxidants were added to the block copolymer to form a preblend, prior to the introduction into the extruder. Thereafter the tackifying resin and extender oil were added to the extruder.

The antioxidants were selected from the group of alkyl substituted phenols and substituted phosphite antioxidants. The level of antioxidant ranged from 1 to 3 parts per 100 parts of copolymer.

It will be recognized by those of ordinary skill in the art that minor variations in the foregoing procedure may be necessary, depending on the characteristics of individual extruders.

The compounded extrudate was stored at room temperature and reheated at a temperature of 160 to 200 °C; it was delivered by means of a closed piping system to a positive displacement pump, which in turn delivered the molten adhesive through a coating die onto a backing material, which was transported by means of an appropriate web handling system. The backing material was biaxially oriented polypropylene (BOPP) film, having a nominal thickness of 25 micrometres (1.0 mils). The backing has been corona treated to provide a surface energy of at least 39 dynes/cm. Usually, the corona treatment provided surface energy of less than 44 dynes/cm. One corona treated surface was coated with a release layer of K-release copolymer (trademark of Hoechst) at an average thickness of 0.1 to 0.5 micrometres.

The adhesive layer was coated on the corona treated surface opposite the surface containing the release layer.

The thickness of the adhesive layer in the examples was adjusted to provide a coating weight of 20 to 25 grams of adhesive per square metre of backing. It will be recognized by those of ordinary skill in the art that the coating weight of the adhesive may vary slightly depending on the design of the equipment, the skill of the operator, and the temperature or viscosity of the adhesive.

The hot adhesive on the web was quenched by passing the coated web around cooling rolls. The coated web was wound into a continuous roll, from which it could be slit to the desired width for testing and/or ultimate use.

The values of 180° peel adhesion were determined by PSTC 1 or ASTM Test Method 3330-M83, 180° Peel Adhesion from Stainless Steel. The values reported are the average of two or more determinations and are reported in Newtons of peel per 25 mm width of coated pressure sensitive tape at a crosshead or carriage rate of 300 mm per minute.

The values of shear strength were determined by FTM 8 or by ASTM Test Method 3654-82, 23 °C Shear to Stainless Steel. The values are reported in minutes until failure and are the average of two or more determinations. Typically, if the sample did not fail in approximately one day, i.e. more than 10000 minutes, the test was terminated, and the value is reported as the time to test termination.

In the examples, Polymer P1 was a styrene-isoprene-styrene linear elastomeric block copolymer of the prior art, widely used under trade name CARIFLEX TR 1107 for preparing pressure sensitive adhesive tapes and labels. Polymer P1 had a styrene content of 15% by weight, a molecular weight of about 208,000, expressed in polystyrene equivalent weight units, and a load-bearing capacity of 80%. The molecular weight of the polystyrene endblock of Polymer P1 was about 11,000.

Polymer P2 was an (AB)₃-Z radial elastomeric block copolymer of the prior art, having a styrene content of 21% by weight, a molecular weight of about 230,000, expressed in polystyrene equivalent weight units, and a load-bearing capacity of 90%. The molecular weight of the polystyrene endblock of Polymer P2 was about 12,000. The other polymeric block (i.e. "B") of Polymer P2 was polyisoprene, whereas Z was the residue of TNP as coupling agent.

Polymer P3 was a linear styrene-isoprene-styrene elastomeric block copolymer fully sequential prepared, using sec.butyllithium initiator and cyclopentane as solvent and being free of accompanying diblock copolymer, according to the present invention. Said triblock copolymer had a styrene content of 19%, a molecular weight of 168,000 expressed in polystyrene equivalent weight units. The molecular weight of the styrene blocks was 11,000.

Polymer P4 was a linear styrene-isoprene-styrene elastomeric block copolymer, obtained by coupling of initially prepared living styrene-isoprene diblock copolymer, using sec.butyllithium as initiator and cyclopentane as solvent, having a molecular weight of 57,000, by means of MDCS, with a coupling efficiency of 80%.

The triblock copolymer had a polystyrene content of 23%, and an overall molecular weight of 145,000. The molecular weight of the styrene blocks was 13,000.

The test results are listed in the following table.

**TABLE I**

| TEST COMPOSITIONS: | | | | |
|---|---|---|---|---|
| P1** | 100 | -- | -- | -- |
| P2** | -- | 100 | -- | -- |
| P3 | -- | -- | 100 | -- |
| P4 | -- | -- | -- | 100 |
| HERCULES MBG 208 | 120 | 120 | 120 | 120 |
| CATENEX ⁽*⁾ 956 | 20 | 20 | 20 | 20 |
| IRGANOX 1010 | 2 | 2 | 2 | 2 |
| Coating weight (gsm) | 22 | 24 | 22 | 25 |
| Substrate | BOPP | BOPP | BOPP | BOPP |
| Peel adhesion to steel (N/25 mm) | 14 | 15 | 16 | 19 |
| Shear adhesion to steel at 23 °C/2.5 kg (mins) | >10K | >10K | >10K | >10K |
| Shear adhesion to steel at 40 °C/2.5 kg (mins) | 963 | 3157 | >10K | 1890 |
| Shear adhesion to carton at 40 °C/1 kg (mins) | 262 | 1212 | 2042 | 2624 |

| TEST COMPOSITIONS: | | | | |
|---|---|---|---|---|
| | P1** | P2** | P3 | P4 |
| Shear adhesion to steel at 70 °C/0.5 kg (mins) | 181 | 5411 | 2093 | 935 |
| Flaptest to carton at 23 °C/1 kg (mins) | 85 | 70 | >200 | >200 |
| Rolling ball tack (cm) | 7 | 11 | 9 | 11 |
| Loop tack (N/25 mm) | 26 | 29 | 28 | 24 |
| SAFT, 0.5 kg, °C | 85 | 98 | 95 | 92 |

| Hot melt viscosity | | | | |
|---|---|---|---|---|
| Brookfield viscosity* 180 °C Pa.s | 44 | 26 | 37 | 19 |

| | | | | |
|---|---|---|---|---|
| (* CATENEX is a trademark) | | | | |
| * Estimated according to ASTM D 3236-73. | | | | |
| ** not according to the invention | | | | |

According to another embodiment of the present invention, the polymer P₃ was incorporated in an adhesive composition according to the following Table

**TABLE II**

| | | | | | |
|---|---|---|---|---|---|
| P3 | 100 | 100 | 100 | 100 | 100 |
| ESCOREZ 2203 | 120 | 120 | 110 | 100 | 100 |
| CATENEX 956 | 20 | 30 | 25 | 20 | 30 |
| IRGANOX 1010 | 2 | 2 | 2 | 2 | 2 |
| HP KRAFT 40C 1kg ½ square inch | 91 | 30 | 40 | 89 | 293 (minutes) |
| Loop tack (N/25 mm) | 18 | 20 | 19 | 19 | 21 (n/25mm) |
| Hot melt viscosity* 190°C Pa.s | 25 | 13 | 21 | 27 | 15 (Pa.s) |
| Rolling ball tack (cm) | 1.5 | 2 | 2 | 2 | 1(cm) |

| | | | | | |
|---|---|---|---|---|---|
| * Estimated according to ASTM D 3236-73. | | | | | |

## Claims

1. Linear block copolymers, comprising two terminal blocks of predominantly a monovinylaromatic compound and one block of predominantly a conjugated diene, characterized by a monovinylaromatic content in the range of from 15 to 25 wt%, a total apparent molecular weight in the range of from 140,000 to 170,000 and a true molecular weight of poly(monovinylaromatic) blocks in the range of from 10,000 to 13,000, optionally mixed with amounts of less than 20 wt%, relative to the weight of the total block copolymer composition, of diblock copolymer and comprising blocks similar to those of the triblock copolymer component.

2. Linear block copolymers according to claim 1, characterized in that the diblock copolymer content, relative to the weight of the total block copolymer weight is in the range of from 0 to 15 wt%.

3. Linear block copolymers according to claims 1 and 2, characterized in that they have been derived from styrene and isoprene as major monomers.

4. Linear block copolymers according to claim 3, characterized in that the triblock copolymers have a styrene content of from 19 to 25 wt%.

5. Linear block copolymers according to claim 3, characterized in that the true molecular weight of the poly(monovinylaromatic) blocks are in the range of from 11,000 to 13,000.

6. Linear block copolymers according to claim 1, characterized in that the molar weight ratio between the poly(monovinylaromatic) blocks of the diblock and triblock copolymer is within the range of from 0.99 to 1.01.

7. Use of linear block copolymers according to claims 1-6, in high shear strength pressure sensitive adhesive compositions.

8. High shear strength pressure sensitive adhesive hot melt compositions, comprising one or more block copolymers according to claims 1-6, in addition to one or more members selected from tackifying resins, plasticizers, such as compounding oils or liquid resins and stabilizers.

9. High shear strength pressure sensitive adhesive hot-melt compositions according to claim 8, comprising of from 15 wt% to 50 wt% of block copolymer, based on the weight of the hot-melt adhesive composition; from 25 wt% to 50 wt% based on the weight of the hot-melt composition of a compatible primary tackifying resin; from 0 to 20 wt%, of a plasticizing oil, or secondary tackifying resin or both, based on the weight of the hot-melt adhesive composition; and from 0.1 to 2 wt% of a stabilizer based on the weight of the hot-melt composition.

10. Hot-melt adhesive compositions according to claims 8 and 9, characterized in that tackifying resins have been included, selected from mixed aromatic and aliphatic petroleum hydrocarbon resins, where the aliphatic hydrocarbon resins represent more than 50 wt% of the total resins.

11. Hot-melt adhesive compositions accordings to claims 8-10, characterized in that as stabilizers and/or antioxidants are incorporated combinations of tris(nonylphenyl)phosphite and pentaerythrityl tetrakis (3,5-di-tert-butyl-4-hydroxyhydrocinnamate); octadecylester of 3,5-bis(1,1-dimethylethyl)-4-hydroxybenzene propanoic acid; 2,4-bis(n-octylthio)-6-(4-hydroxy-3,5-di-tert-butylanilino)-1,3,5-triazine or 2-tert-butyl-6-(3-tert-butyl-2'-hydroxy-5-methylbenzyl)-4-methylphenyl acrylate.

12. Process for the preparation of hot-melt adhesive compositions, comprising premixing the primary tackifyng resin, the block copolymer according to claims 1-6 and the stabilizer and/or antioxidant, followed by the addition of the optional secondary liquid tackifying resin or palsticizing oil.

13. Use of the high shear strength adhesive compositions according to claims 8-10 in packaging tapes.

14. Packaging tapes comprising a high shear strength pressure adhesive composition according to claims 8-10 and a suitable carrier.

## Patentansprüche

1. Lineare Blockcopolymere, umfassend zwei endständige Blöcke aus überwiegend einer monovinylaromatischen Verbindung und einen Block aus überwiegend einem konjugierten Dien, gekennzeichnet durch einen Monovinylaromatengehalt im Bereich von 15 bis 25 Gew.-%, ein scheinbares Gesamtmolekulargewicht im Bereich von 140.000 bis 170.000 und ein wahres Molekulargewicht der Poly(monovinylaromat)blöcke im Bereich von 10.000 bis 13.000, gegebenenfalls im Gemisch mit Mengen von weniger als 20 Gew.-%, bezogen auf das Gewicht der gesamten Blockcopolymerzusammensetzung, an Zweiblockcopolymer, das Blöcke umfaßt, die denen der Dreiblockcopolymerkomponente ähnlich sind.

2. Lineare Blockcopolymere nach Anspruch 1, dadurch gekennzeichnet, daß der Gehalt an Zweiblockcopolymer, bezogen auf das Gewicht des gesamten Blockcopolymers, im Bereich von 0 bis 15 Gew.-% liegt.

3. Lineare Blockcopolymere nach den Ansprüchen 1 und 2, dadurch gekennzeichnet, daß sie von Styrol und Isopren als Hauptmonomere abgeleitet sind.

4. Lineare Blockcopolymere nach Anspruch 3, dadurch gekennzeichnet, daß die Dreiblockcopolymere einen Styrolgehalt von 19 bis 25 Gew.-% aufweisen.

5. Lineare Blockcopolymere nach Anspruch 3, dadurch gekennzeichnet, daß das wahre Molekulargewicht der Poly(monovinylaromat)blöcke im Bereich von 11.000 bis 13.000 liegt.

6. Lineare Blockcopolymere nach Anspruch 1, dadurch gekennzeichnet, daß das Molgewichtsverhältnis zwischen den Poly(monovinylaromat)blöcken des Zweiblock- und des Dreiblockcopolymers im Bereich von 0,99 bis 1,01 liegt.

7. Verwendung von linearen Blockcopolymeren nach den Ansprüchen 1 bis 6 in druckempfindlichen Klebstoffzusammensetzungen mit hoher Scherfestigkeit.

8. Druckempfindliche Heißschmelzklebstoffzusammensetzungen mit hoher Scherfestigkeit, umfassend ein oder mehrere Blockcopolymere nach den Ansprüchen 1 bis 6 zusätzlich zu einem oder zu mehreren, unter klebrigmachenden Harzen, Weichmachern, wie Compoundieröle oder flüssige Harze, und Stabilisatoren ausgewählten Gliedern.

9. Druckempfindliche Heischmelzklebstoffzusammensetzungen mit hoher Scherfestigkeit nach Anspruch 8, umfassend 15 Gew.-% bis 50 Gew.-% Blockcopolymer, bezogen auf das Gewicht der Heißschmelzklebstoffzusammensetzung; 25 Gew.-% bis 50 Gew.-%, bezogen auf das Gewicht der Heißschmelzzusammensetzung, eines verträglichen primären klebrigmachenden Harzes; 0 bis 20 Gew.-% eines weichmachenden Öls oder eines sekundären klebrigmachenden Harzes oder beide, bezogen auf das Gewicht der Heißschmelzklebstoffzusammensetzung; und 0,1 bis 2 Gew.-% eines Stabilisators, bezogen auf das Gewicht der Heißschmelzzusammensetzung.

10. Heißschmelzklebstoffzusammensetzungen nach den Ansprüchen 8 und 9, dadurch gekennzeichnet, daß klebrigmachende Harze aufgenommen worden sind, ausgewählt unter gemischten aromatischen und aliphatischen Erdölkohlenwasserstoffharzen, wobei die aliphatischen Kohlenwasserstoffharze mehr als 50 Gew.-% der Gesamtharze ausmachen.

11. Heißschmelzklebstoffzusammensetzungen nach den Ansprüchen 8 bis 10, dadurch gekennzeichnet, daß als Stabilisatoren und/oder Anitoxidantien Kombinationen aus Tris(nonylphenyl)phosphit und Pentaerythrityl-tetrakis (3,5-di-tert.-butyl-4-hydroxyhydrocinnamat); Octadecylester von 3,5-Bis (1,1-dimethylethyl)-4-hydroxyphenyl-propionsäure; 2,4-Bis (n-octylthio)-6-(4-hydroxy-3,5-di-tert.-butylanilino)-1,3,5-triazin oder 2-tert.-Butyl-6-(3-tert-butyl-2'-hydroxy-5-methylbenzyl)-4-methylphenylacrylat eingearbeitet sind.

12. Verfahren zur Herstellung von Heißschmelzklebstoffzusammensetzungen, umfassend ein Vormischen des primären klebrigmachenden Harzes, des Blockcopolymers nach den Ansprüchen 1 bis 6 und des Stabilisators und/oder Antioxidationsmittels, gefolgt von der Zugabe des fakultativen sekundären flüssigen klebrigmachenden Harzes oder des weichmachenden Öls.

13. Verwendung der Klebstoffzusammensetzungen mit hoher Scherfestigkeit nach den Ansprüchen 8 bis 10 in Verpackungsbändern.

14. Verpackungsbänder, umfassend eine druckempfindliche Klebstoffzusammensetzung mit hoher Scherfestigkeit nach den Ansprüchen 8 bis 10 und einen geeigneten Träger.

## Revendications

1. Copolymères blocs linéaires, comprenant deux blocs terminaux d'un composé monovinyl aromatique essentiellement et un bloc d'un diène conjugué essentiellement, caractérisés par une teneur en monovinyl aromatique allant de 15 à 25 % en poids, un poids moléculaire apparent total allant de 140.000 à 170.000 et un poids moléculaire réel de blocs poly(monovinyl aromatiques) allant de 10.000 à 13.000, éventuellement mélangés à des quantités inférieures à 20 % en poids, par rapport au poids de la composition de copolymère bloc totale, de copolymère dibloc et comprenant des blocs similaires à ceux du composant de copolymère tribloc.

2. Copolymères blocs linéaires suivant la revendication 1, caractérisés en ce que la teneur en copolymère dibloc, par rapport au poids du poids de copolymère bloc total, est de 0 à 15 % en poids.

3. Copolymères blocs linéaires suivant l'une ou l'autre des revendications 1 et 2, caractérisés en ce qu'ils provenaient de styrène et d'isoprène comme monomères majeurs.

4. Copolymères blocs linéaires suivant la revendication 3, caractérisés en ce que les copolymères triblocs ont une teneur en styrène de 19 à 25% en poids.

5. Copolymères blocs linéaires suivant la revendication 3, caractérisés en que le poids moléculaire vrai des blocs poly(monovinyl aromatiques) se situe dans la gamme de 11.000 à 13.000.

6. Copolymères blocs linéaires suivant la revendication 1, caractérisés en ce que le rapport en poids molaire entre les blocs poly(monovinyl aromatiques) du copolymère dibloc et tribloc se situe dans la gamme de 0,99 à 1,01.

7. Utilisation de copolymères blocs linéaires suivant l'une quelconque des revendications 1 à 6, dans des compositions d'adhésif sensible à la pression d'une résistance au cisaillement élevé.

8. Compositions fusibles à chaud d'adhésif sensible à la pression d'une résistance au cisaillement élevée, comprenant un ou plusieurs copolymères blocs suivant l'une quelconque des revendications 1 à 6, en plus d'un ou plusieurs membres choisis parmi les résines assurant un collage, les plastifiants, comme les huiles de compoundage ou les résines liquides et les stabilisants.

9. Compositions fusibles à chaud d'adhésif sensible à la pression d'une résistance au cisaillement élevée suivant la revendication 8, comprenant de 15 % en poids à 50 % en poids de copolymère bloc, par rapport au poids de la composition d'adhésif fusible à chaud, de 25 % en poids à 50 % en poids par rapport au poids de la composition fusible à chaud d'une résine assurant un collage primaire compatible, de 0 à 20 % en poids d'une huile plastifiante ou d'une résine assurant un collage secondaire ou des deux, par rapport au poids de la composition d'adhésif fusible à chaud, et de 0,1 à 2% en poids d'un stabilisant par rapport au poids de la composition fusible à chaud.

10. Compositions d'adhésif fusibles à chaud suivant l'une ou l'autre des revendications 8 et 9, caractérisées en ce que des résines assurant un collage ont été incorporées, choisies parmi les résines d'hydrocarbures de pétrole aromatiques et aliphatiques mixtes, dans lesquelles les résines d'hydrocarbures aliphatiques représentent plus de 50 % en poids des résines totales.

11. Compositions d'adhésif fusibles à chaud suivant l'une quelconque des revendications 8 à 10, caractérisées en ce que comme stabilisants et/ou antioxydants sont incorporées des combinaisons de tris(nonylphényl)phosphite et de pentaérythrityl tétrakis(3,5-di-tert-butyl-4-hydroxyhydrocinnamate), d'ester octadécylique d'acide 3,5-bis(1,1-diméthyléthyl)-4-hydroxybenzène propanoïque, de 2,4-bis(n-octylthio)-6-(4-hydroxy-3,5-di-tert-butylanilino)-1,3,5-triazine ou de 2-tert-butyl-6-(3-tert-butyl-2'-hydroxy-5-méthylbenzyl)-4-méthylphényl acrylate.

12. Procédé de préparation de compositions d'adhésif fusibles à chaud, comprenant un prémélange de la résine assurant un collage primaire, du copolymère bloc suivant l'une quelconque des revendications 1 à 6 et du stabilisant et/ou de l'antioxydant, suivi de l'addition de la résine assurant un collage liquide secondaire ou de l'huile plastifiante facultative.

13. Utilisation des compositions d'adhésif d'une résistance au cisaillement élevée suivant l'une quelconque des revendications 8 à 10, dans des rubans d'emballage.

14. Rubans d'emballage comprenant une composition d'adhésif sensible à la pression d'une résistance au cisaillement élevée suivant l'une quelconque des revendications 8 à 10 et un support approprié.
